Europäisches Patentamt

(19) European Patent Office

Office européen des brevets

(11) Numéro de publication: **0 273 834**
A1

## (12) DEMANDE DE BREVET EUROPEEN

(21) Numéro de dépôt: 87420318.5

(22) Date de dépôt: 24.11.87

(51) Int. Cl.⁴: **B 23 B 31/24**
B 23 Q 3/155, F 16 H 3/34

(30) Priorité: 24.11.86 FR 8616851

(43) Date de publication de la demande:
06.07.88 Bulletin 88/27

(84) Etats contractants désignés:
CH DE ES GB IT LI

(71) Demandeur: **R.M. ROBOTS (Société à Responsabilité Limitée)**
**Zone industrielle de Fonsala Route du Coin**
**F-42400 Saint Chamond  (FR)**

**Moulin, Georges**
**17 bis, rue de Terrenoire**
**F-42100 Saint Etienne  (FR)**

(72) Inventeur: **Moulin, Georges**
**17 bis, rue de Terrenoire**
**F-42100 Saint-Etienne  (FR)**

(74) Mandataire: **Dupuis, François**
**Cabinet Charras 3 Place de l'Hôtel-de-Ville BP 203**
**F-42005 St. Etienne Cédex 1  (FR)**

(54) Dispositif autorisant le changement d'outils montés sur des mandrins notamment de fraisage pour machines-outils, centres d'usinage à commande numérique et machines similaires.

(57) Ce dispositif est remarquable en ce qu'il comprend deux moyens (1-2) comprenant des dentures, agissant complémentairement, l'un (1) sous forme de couronne ou bague de petite diamètre s'adaptant sur la bague écrou (3) du mandrin d'une machine, et l'autre sur un plateau support ou partie supérieure d'un changeur d'outils situé à proximité de ladite machine, les deux moyens coopérant par un appui ferme de leurs parties en regard, pour sous l'action de l'un des moyens entraîneurs provoquer l'action de desserrage-déverrouillage de la bague écrou en libérant l'outil, ou l'action de serrage verrouillage de ladite bague écrou après mise en place du nouvel outil ; le second moyen étant agencé pour recevoir un mécanisme comprenant un moyen détectant les dentures du premier moyen en position quelconque, en regard des deux moyens et autorisant la mise en position desdites denture correctement en vue de l'engrenement des deux moyens (1 - 2).

FIG. 2

EP 0 273 834 A1

## Description

L'invention a pour objet un dispositif autorisant le changement d'outils montés sur des mandrins notamment de fraisage pour machines outils, centres d'usinage à commande numérique et machines similaires.

Selon l'art antérieur, les mandrins de fraisage qui sont emmanchés dans les broches des machines, sont agencés avec une bague écrou permettant le serrage ou desserrage d'un outil selon les besoins et utilisations de celui-ci.

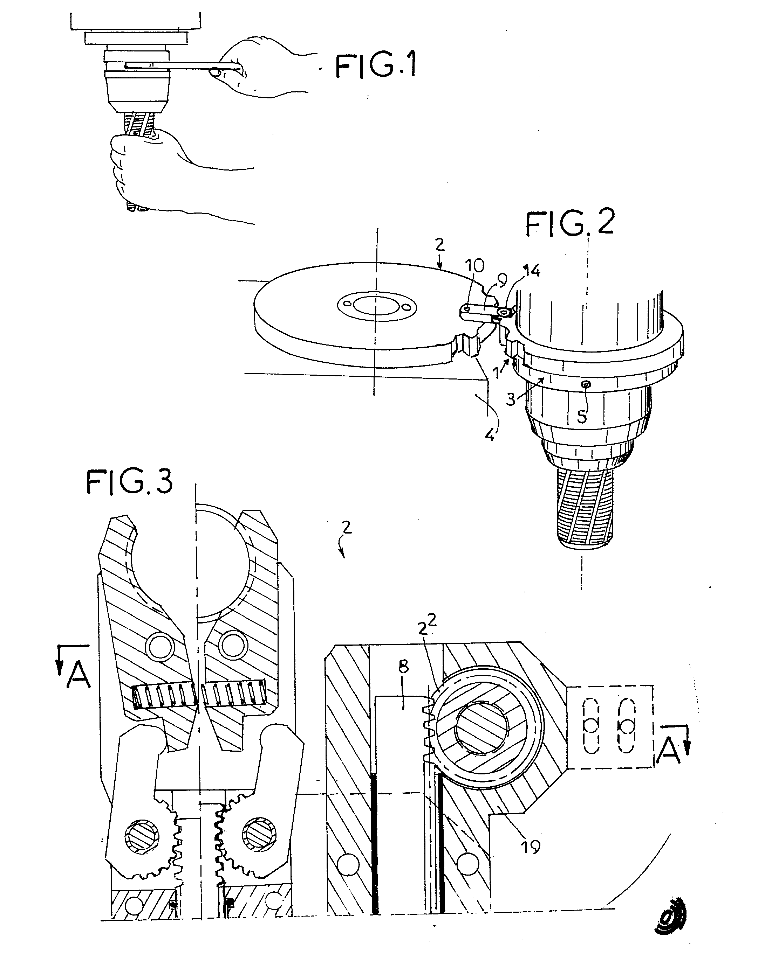

Ainsi qu'il est illustré à la figure 1, actuellement le changement d'outils nécessite une intervention manuelle d'un opérateur, qui à l'aide d'une clé à main effectue l'opération soit de déblocage déverrouillage de la bague écrou, soit la manoeuvre inverse de blocage et serrage.

On conçoit que cette intervention manuelle est longue, pas toujours très précise et irrégulière dans les efforts de serrage effectués. En outre, l'intervention d'un opérateur est en contradiction avec le concept d'une automatisation de production des autres opérations. Un autre inconvénient réside dans le fait que cette technique manuelle ne permet pas l'utilisation d'un changeur d'outils.

Le but recherché selon l'invention était de proposer un dispositif simple, fiable qui permette une action de serrage-desserrage de la bague écrou très rapide tout en garantissant une unité d'efforts constante lors du serrage ou desserrage et permettant son application dans le cadre d'une automatisation de production.

Un autre but recherché selon l'invention était de prévoir à titre complémentaire un dispositif qui puisse fonctionner en synchronisation avec un changeur d'outils pour prélever ou positionner l'outil dans le mandrin de fraisage.

Ces buts et d'autres ont été atteints par une solution simple, facile à mettre en oeuvre et d'une grande fiabilité.

Selon une première caractéristique, le dispositif est caractérisé en ce qu'il comprend deux moyens comprenant des dentures, agissant complémentairement, l'un sous forme de couronne ou bague de petite diamètre s'adaptant sur la bague écrou du mandrin d'une machine et l'autre sur un plateau support ou partie supérieure d'un changeur d'outils situé à proximité de ladite machine, les deux moyens coopérant par un appui de leurs parties en regard, pour sous l'action en rotation de l'un des moyens entraineurs provoquer l'action de desserrage-déverrouillage de la bague écrou en libérant l'outil, ou l'action de serrage-verrouillage de ladite bague écrou après mise en place du nouvel outil ; le second moyen étant agencé pour recevoir un mécanisme comprenant un moyen détectant les dentures du premier moyen, en position quelconque en regard des deux moyens et autorisant la mise en position desdites dentures correctement en vue de l'engrenement des deux moyens.

Ces caractéristiques et d'autres encore ressortiront bien de la suite de la description.

Pour fixer l'objet de l'invention illustré d'une manière non limitative aux figures des dessins où :

- La figure 1 est une vue illustrant l'art antérieur.

- La figure 2 est une vue à caractère schématique en perspective illustrant le dispositif monté sur un plateau support tel que par exemple sur la partie supérieure d'un changeur d'outils.

- La figure 3 est une vue de dessus partielle du dispositif illustrant notamment sa capacité de réglage en position d'une part en égard de son support d'appui et d'autre part en égard du mandrin de fraisage monté sur la broche d'une machine outil ou centre d'usinage à proximité par exemple du changer d'outil.

- La figure 4 est une vue partielle en coupe selon la ligne A-A de la figure 3.

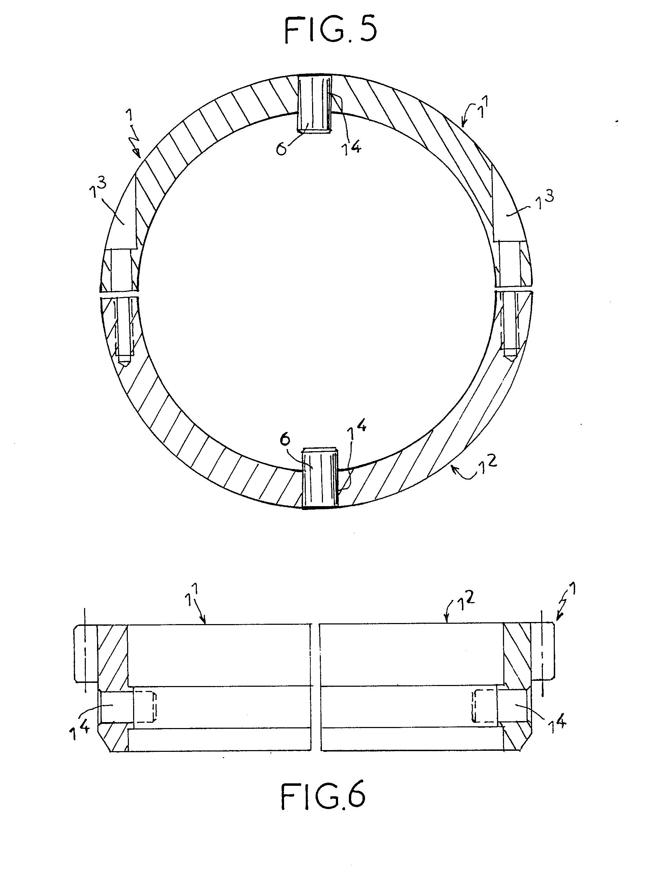

- La figure 5 est une vue en plan illustrant un premier moyen établi par exemple sous la forme d'un pignon s'adaptant sur la bague écrou du mandrin de serrage.

- La figure 6 est une vue de profil selon la figure 5.

- La figure 7 est une vue en plan du second moyen sus ceptible de coopérer avec le premier moyen, établi sous la forme d'un second pignon monté sur un plateau support et de préférence sur la face supérieure d'un changeur d'outils.

- La figure 8 est une vue en plan à caractère schématique illustrant le rapprochement des premier et second moyens du dispositif selon l'invention.

- La figure 9 est une vue en plan semblable à celle de la figure 8, mais après rapprochement des premier et second moyens entre eux dans une phase de prépositionnement, lesdits moyens étant des pignons.

- La figure 10 est une vue en plan selon la figure 9 dans la phase de coopération des moyens entre eux et en particulier dans la phase d'engrenement des pignons entre eux.

- La figure 11 est une vue à grande échelle selon la figure 10 illustrant la position des différents éléments constitutifs du dispositif lorsque le premier et le second moyens sont établis sous la forme de pignons.

- La figure 12 est une vue à plus grande échelle illustrant la phase suivante de celle illustrée figure 11.

- La figure 13 est une vue de face partielle illustrant dans une réalisation particulière, la synchronisation des mouvements du dispositif selon l'invention pour agir selon une fonction de serrage-désserrage de la bague écrou du mandrin de serrage, et du changeur d'outils remplaçant l'outil inséré dans ledit mandrin.

- La figure 14 est une vue en variante illustrant le second moyen sous forme d'une crémaillère.

Afin de rendre plus concret l'objet de l'invention, on le décrit maintennt d'une manière non limitative illustré aux figures des dessins.

L'invention réside dans la conception et mise en oeuvre d'un dispositif assurant automatiquement et sans l'aide d'un opérateur la fonction de serrage ou desserrage de la bague écrou d'un mandrin de fraisage par exemple en vue d'effectuer une opération de changement de l'outil de travail.

Plus particulièrement, l'invention met en oeuvre deux moyens agissant complémentairement l'un à l'autre et pour une coopération étroite, l'un s'adaptant sur la bague écrou du mandrin et l'ature sur un plateau support ou de préférence sur la partie ou plateau supérieur du changeur d'outils situé à proximité de la machine outil ou centre d'usinage.

Les deux moyens coopèrant par un appui ferme de leurs parties en regard par friction, ou par un engrenement. Selon une première forme de réalisation, les deux moyens sont établis sous la forme de bagues de dimensions différentes selon un rapport préétabli, ces bagues s'entrainant mutuellement, l'une étant considérée comme la bague d'entrainement et étant celle située sur le plateau support ou sur le changeur d'outils. Ces bagues présentent une couronne en matériau type élastomère ou autre permettant un bon coefficient de frottement et de friction.

Selon une seconde forme de realisation illustrée plus particulièrement aux figures des dessins, les deux moyens sont réalisés par des couronnes dentées ou pignongs (1-2).

Le premier pignon (1) est monté fixement et de manière démontable sur la bague écrou (3) du mandrin, le second pignon (2) est disposé sur le plateau support (4) ou partie supérieure du changeur d'outils. Dès à présent, il est signalé que le changeur d'outil peut être de toutes formes, présenter les agencements les plus divers, ceux-ci n'étant pas liès à la fonction du dispositif selon l'invention. Un changeur d'outil approprié non limitativement peut être celui décrit dans le brevet européen n°35952.

Le dispositif selon l'invention peut être utilisé seul, c'est-à-dire indépendamment de tout changeur d'outil. De préférence, le dispositif selon l'invention est monté sur un changeur permettant une synchronisation des mouvements avec des temporisationé éventuelles pour le serrage-desserrage de la bague écrou et le montage ou l'enlèvement de l'outil.

Ainsi qu'il apparait aux dessins, le premier moyen qu'il soit réalisé sous la forme d'une bague ou d'une couronne dentée ou pignons, est établi en deux demi-secteurs (1.1-1.2) complémentaires s'ajustant et ceinturant la bague écrou (3). Des logements (1.3) sont prévus pour le positionnement de boulons de liaison (5). En outre, les deux demi-secteurs sont agencés dans leur épaisseur avec au moins deux ouvertures (1.4) opposées pour recevoir des plots ou doigts (6) d'entrainement pénétrant dans les évidements (3.1) existant sur la bague écrou.

Le second moyen (2) coopère avec le premier moyen (1) pour autoriser l'ouverture ou la fermeture de la bague écrou. Le second moyen est realise de manière complémentaire. Les rapports dimensionnels des deux moyens (1-2) sont tels qu'une rotation d'environ 330 degrés du second est suffisante pour entrainer ou engrener sur plusieurs tours le premier moyen (1).

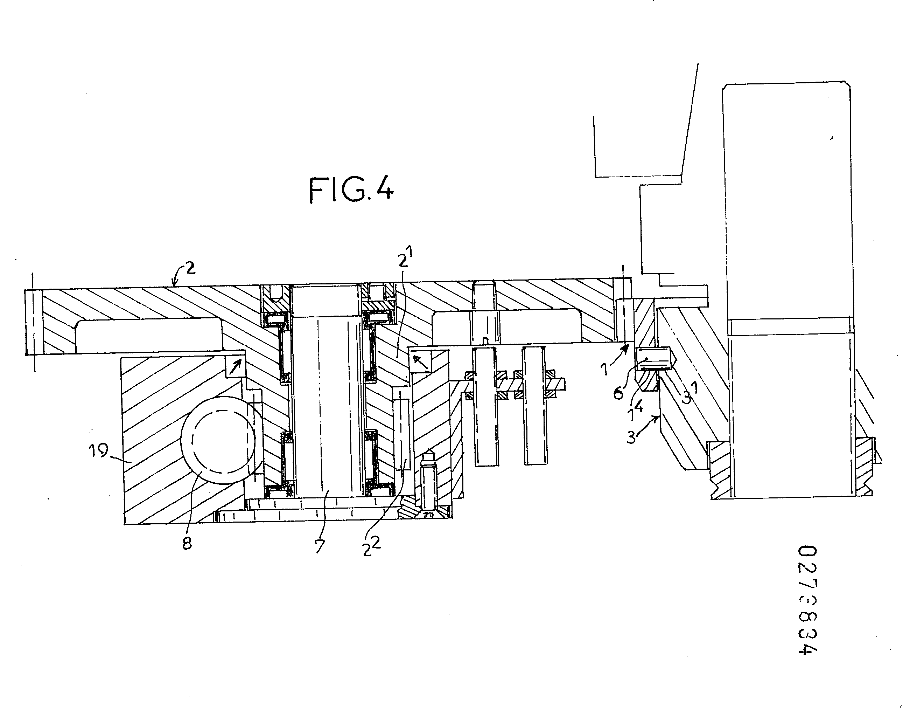

Ainsi qu'il apparait notamment à la figure 4, le second moyen comprend un corps (2.1) inférieur sous la partie formant bague ou couronne, monté sur un axe de guidage et de rotation (7) avec des moyens de roulement et d'étanchéité appropriés, ledit axe étant positionné verticalement par rapport au plateau support (4) ou partie supérieure d'un changeur d'outils. La mise en rotation du second moyen (2) est assurée par exemple par une crémaillère (8) coopérant avec une denture (2.2) aménagée à cet effet sur la base inférieure du corps (2.1). Cette crémaillère est logée dans un guide support (19) rapporté et monté sur le plateau support précité. La longueur de la crémaillère est telle qu'elle permet la rotation du second moyen dans un sens ou dans l'autre d'environ 330 degrés. La commande de la crémaillère s'effectue par tous moyens appropriés lors du cycle opératoire de fonctionnement du dispositif.

En particulier, le déplacement de la crémaillère peut s'effectuer par pression hydraulique. Le réglage de cette pression donne un couple de serrage plus ou moins important. On peut donc à l'avance adapter, cas par cas, les couples de serrage qui sont calculés, précis et variables selon les besoins.

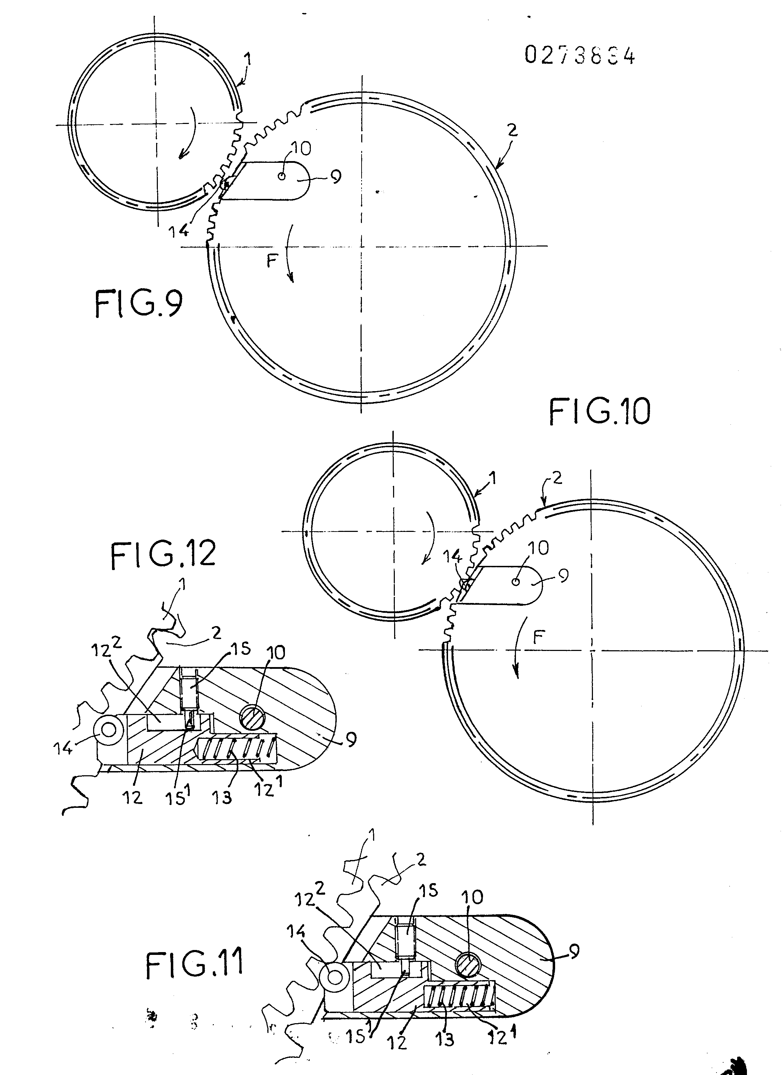

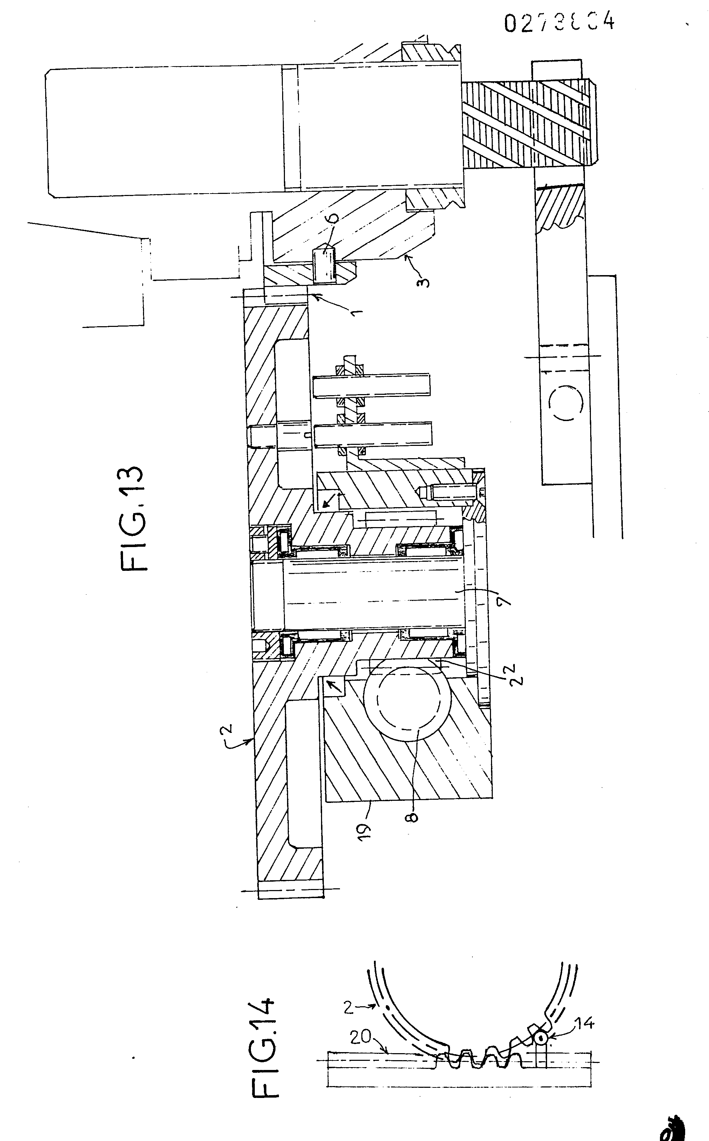

Selon une autre caractéristique de ce dernier, dans le cadre de la mise en oeuvre des deux moyens sous la forme de cou ronnes denées ou pignons (1,2), il est prévu sur le second moyen un mécanisme permettant lors du rapprochement desdits moyens entre eux leur positionnement précis en vue de l'engrenement pour le desserrage ou serrage de la bague-écrou. Plus particulièrement ainsi qu'illustré figures 10 et 11, ledit mécanisme est disposé sur le second moyen. Il comprend un corps (9) de forme allongée fixé un pignon (2) par un axe de fixation (10) et est aménagé intérieurement pour constituer une chambre (11). Celle-ci reçoit un élément ayant une fonction de poussoir (12) escamotable à l'encontre d'un moyen de rappel (13), ledit poussoir étant agencé à son extrémité libre, orientée vers l'extérieur au niveau des denst du pignon (2), pour recevoir un galet (14) libre en rotation. Ainsi qu'il apparait aux dessins, ce galet est disposé adjacent aux dents du pignon (2) pour venir en contact préalable et se centrer entre deux dents consécutives du pignon (1). Plus spécifiquement, ledit galet permet un positionnement préalable des dentures des pignons (1-2) avant leur engrenement.

A cet effet, le poussoir est aménagé d'une part avec un trou borgne (12.1) à sa partie arrière dans laquel est positionné le ressort de rappel et d'autre part latéralement avec un évidement ou lumière (12.2) dans lequel un doigt (15) prolongateur d'une butée (15) montée sur le corps agit comme limiteur de course du poussoir. Sous l'action de détente du ressort, le poussoir se trouve dégagé vers l'extérieur du pignon et son galet (14) déborde sensiblement du plan périphérique du pignon.

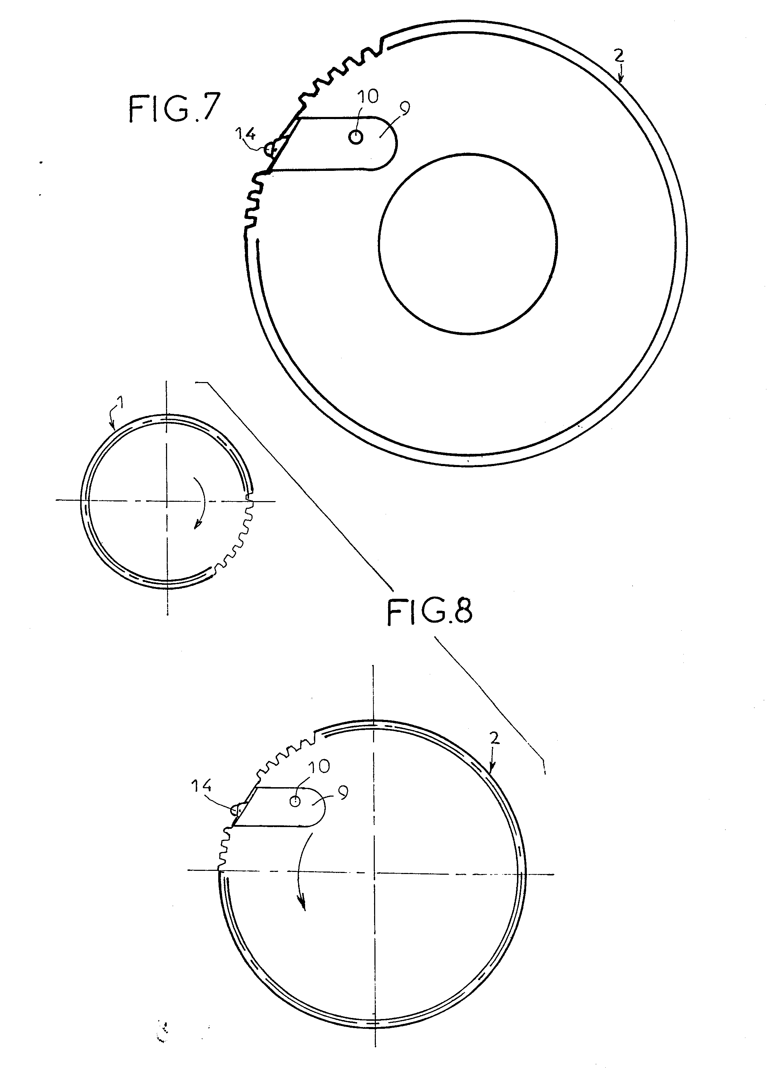

Il convient dès lors d'exposer le fonctionnement du dispositif selon l'invention en se référant successivement aux figures 8 à 12.

La Figur 8 illustre la phase de rapprochement initial des deux pignons dans le cadre du cycle opératoire en vue du changement de l'outil. Le rapprochement s'effectue par déplacement seul de la broche support du mandrin, ou par déplacement du changeur d'outils, ou plateau support du second moyen, ou par rapprochement combiné des deux selon les caractéristiques pro pres de montage et de mouvements autorisés.

La figure 9 illustre la phase préalable de l'engrenement des pignons et correspondant à la sélection de la position des dents du premier pignon sur le second. A cet effet, le galet (14) escamotable est en contact ou appui contre l'une des dents du pignon (1). Compte tenu du positionnement initial aléatoire des dentures des pignons, le galet, grâce à sa capacité elastique de retrait combiné au fait que la broche du mandrin de fraisage est libre en rotation, va se positionner automatiquement et avec souplesse entre deux dents successives du pignon (1), en provoquant une légère rotation, en avant ou en arrière, du pignon 1. Lorsque le galet convenablement positionné, entre les deux dents successives du pignon (1) sélectionnées, la position des deux pignons (1-2) est correcte et leur engrenement possible dans de bonnes conditions, la broche est alors bloquée.

Ladite broche peut être bloquée par exemple par les entraineurs ou ergots d'entrainement des outils qui sont situés sur la broche, ce qui nécessite une mise en position des ergots avant d'engager le déblocage sur la bague-écrou.

Les figures 10 et 12 illustrent cette position. Les deux pignons sont prêts à engrener selon la flèche F et autoriser ainsi le déblocage ou désserrage de la bague écrou.

La figure 12 illustre la phase suivante. Après un début d'engrenement des pignons et rotation, le galet (14) échappe progressivement à l'emprise des dents en regard du pignon (1) et sous l'effet de détente du ressort (12) reprend sa position initiale.

Pour éviter la rotation complète sur un tour du pignon (2), et donc du nouveau passage du galet (14), il est prévu un rapport particulier des pignons entre eux tèl qu'une rotation sur environ 330° du pignon (2) est suffisante pour exercer la fonction de désserrage de la bague écrou.

Après désserrage de la bague écrou, on peut donc changer manuellement ou de préférence automatiquement l'outil, puis une manoeuvre inverse commence pour assurer le blocage et serra ge de la bague-écrou et maintenir en position le nouvel outil.

Dans le cadre de la réalisation des premier et second moyens sous la forme de bagues avec couronnes extérieures en élastomère par exemple, le mécanisme décrit précédemment n'est pas utilisé et seule la friction entre les deux bagues est suffisante pour permettre un désserrage ou serrage de la bague écrou.

Dans une forme de réalisation en variante illustrée figure 14, le second moyen est établi sous la forme d'une crémaillère (20) disposée sur le plateau supérieur du changeur d'outil ou autre comme indiqué précédemment. Cette crémaillère est destinée à engrener avec le premier moyen (1) et est commandée par tous moyens appropriés. Pour assurer l'ajustement des dentures de la crémaillère et du premier moyen, on dispose comme précédemment le mécanisme illustré aus figures 10 et 11. Ce mécanisme est disposé sensiblement en amont du plan de tangence et de prise des dentures entre elles de sorte que le galet (14) vienne en prise préalable entre des dents du premier moyen situées dans un plan supérieur ainsi qu'illustré.

La mise en oeuvre du fonctionnement est identique à la réalisation précédente.

Selon une disposition particulièrement avantageuse de l'invention, le dispositif est combiné avec un action automatique ou changement de l'outil par un changeur d'outils, illustré à la figure 13 des dessins. Le dispositif selon l'invention se situe dans un plan au dessus du mécanisme de saisie des outils. L'operation de changement d'outils s'effectue avec les phases suivantes :

- Approche du changeur d'outils vers la broche de la machine outil.
- Action de desserrage de la bague écrou par l'intervention des moyens (1-2) du dispositif selon l'invention.
- Prise par les doigts de la pince sur l'outil à enlever.
- Dégagement de la pince et de l'outil.
- Présentation d'un nouvel outil dans sa pince.
- Blocage du porte pince après action du dispositif selon l'invention pour serrage de la bague écrou.
- Retrait des doigts de saisie de l'outil et du changeur d'outils pour usinage.

D'après les premiers essais qui ont été effectués, il faut un temps de l'ordre de 6 à 10 secondes pour effectuer toutes ces opérations.

Le rendement est considérablement augmenté, la fiabilité de serrage améliorée et constante.

Les avantages resortent bien de l'invention, on souligne en particulier la simplicité du mécanisme et son utilisation généralisé quel que soit le changeur d'outils sur lequel le dispositif peut être monté pour une automatisation complète de la machine outil ou centre d'usinage.

L'invention a été décrite par exemple pour des mandrins de fraisage, mais d'autres applications sont possibles sur d'autres mandrins. Par ailleurs, dans le cadre d'une automatisation encore plus complète, il est possible que plusieurs dispositifs selon l'invention fonctionnent en synchronisme avec un nombre correspondant de changeurs d'outils pour des centres d'usinages à plusieurs postes.

Il est signalé en outre que le dispositif selon l'invention permet une fonction complémentaire à savoir un arrêt orienté des broches des machines pour permettre l'enlèvement des outils en bonne position, pour les changeurs d'outils standards.

## Revendications

-1- Dispositif autorisant le changement d'outils montés sur des mandrins notamment de fraisage pour machines outils, centres d'usinage à commande numérique et machines similaires caractérisé en ce qu'il comprend deux moyens (1-2) comprenant des dentures, agissant complémentairement, l'un (1) sous forme de couronne ou bague de petit diamètre s'adaptant sur la bague écrou (3) du mandrin d'une machine, et l'autre sur un plateau support ou partie supérieure d'un changeur d'outils situé à proximité de ladite machine, les deux moyens coopérant par un appui ferme de leurs parties en regard, pour sous l'action de l'un des moyens entraineurs provoquer l'action de desserrage-déverrouillage de la bague écrou en libérant l'outil, ou l'action de serrage verrouillage de ladite bague écrou après mise en place du nouvel outil ; le second moyen étant agencé pour recevoir un mécanisme comprenant un moyen détectant les dentures du premier moyen, en position quelconque, en regard des deux moyens et autorisant la mise en position desdites dentures correctement en vue de l'engrenement des deux moyens (1 - 2).

-2- Dispositif selon la revendication 1, caractérisé en ce que le second moyen est une couronne ou bague ou pignon de plus grand diamètre que le premier moyen.

-3- Dispositif selon la revendication 1, caractérisé en ce que le second moyen est une crémaillère.

-4- Appareil selon les revendications 1 et 2, caractérisé en ce que le premier moyen est constitué de deux demi-secteurs (1.1), 1.2) complémentaires s'ajustant et ceinturant la bague écrou (3), agencées avec des logements (1.3) pour le positionnement de moyens de liaison (5) et des ouvertures (1.4) recevant des plots d'entrainement (6) pénétrant dans les évidements (3.1) existants sur la bague écrou.

-5- Dispositif selon la revendication 1, caractérisé en ce que le second moyen (2) comprend un corps (2.1) inférieur sous la partie formant bague ou couronne monté sur un axe de guidage et de rotation (7), la mise en rotation du second moyen (2) étant assurée par une crémaillère (8) logée dans un guide support (9) rapporté et monté sur le plateau support, ladite crémaillère coopérant avec une denture (2.2) aménégée sur la base inférieure du corps (2.1).

-6- Dispositif selon la revendication 1 et l'une quelconque des revendications 2 et 3, caractérisé en ce que ledit mécanisme comprend un corps de forme allongée fixé sur le second moyen (2) et aménagé pour constituter une chambre (11) pour le logement d'un élément poussoir (12) escamotable à l'encontre d'un moyen de rappel (13) ; ledit poussoir étant agencé à son extrémité libre avant, orientée vers l'extérieur au niveau des dentures, pour recevoir un galet (14) libre en rotation, ledit galet assurant une première fonction de détection de la dent en position quelconque du premier moyen après rapprochement de celui-ci vers le second moyen, et une seconde fonction en provoquant une orientation angulaire limitée du premier moyen pour pénétrer dans l'intervalle défini entre deux dents successives du premier moyen.

-7- Dispositif selon la revendication 6, caractérisé en ce que le poussoir est améngé d'une part avec un trou borgne (12.1) à sa partie arrière pour le réception du moyen de rappel (13) et d'autre part latéralement avec un évidement (13.2) autorisant le débordement d'un doigt (15) prolongateur d'une butée d'une montée sur le corps et agissant comme limiteur de course.

-8- Dispositif selon les revendications 6 et 7 ensemble, caractérisé en ce que le second moyen (2) établi sous la forme d'une couronne dentée ou pignon, et aménagée avec un mécanisme de détection d'un dent du premier moyen est assujetti à un déplacement en rotation sur environ 330° assurant ainsi un désserrage suffisant de la bague écrou pour autoriser l'enlèvement de l'outil.

-9- Dispositif selon l'une quelconque des revendications 1 à 8, caractérisé en ce que le second moyen est disposé sur la partie supérieure d'un changeur d'outils, en superposition des moyens de saisie de l'outil disposés sur le changeur, de manière à permettre à l'ensemble de fonctionner en synchronisation d'une part pour déverrouiller la bague écrou et autoriser le prélèvement de l'outil, son remplacement par un autre et le serrage à nouveau du nouvel outil dens ce mandrin.

-10- Dispositif selon la revendication 1, caractérisé en ce qu'il permet une fonction supplémentaire à savoir un arrêt orienté des broches des machines pour autoriser l'enlèvement des outils en bonne position, pour les changeurs d'outils standards.

-11- Dispositif selon la revendication 5, caractérisé en ce que le déplacement de la crémaillère s'effectue par pression hydraulique ; ce réglage de ladite pression créant un couple de serrage variable.

-12- Dispositif selon la revendication 1, caractérisé en ce que le blocage de la broche s'effectue par les entraîneurs.

0273834

FIG.1

FIG.2

FIG.3

0273834

FIG.4

0273834

FIG.5

FIG.6

0273834

FIG.7

FIG.8

0273834

FIG.9

FIG.10

FIG.12

FIG.11

FIG.14

FIG.13

Office européen
des brevets

**RAPPORT DE RECHERCHE EUROPEENNE**

Numero de la demande

EP  87 42 0318

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-3 208 621 (FRAUNHOFER-GESELLSCHAFT) * En entier * | 1-3,6,7 ,12 | B 23 B   31/24 B 23 Q    3/155 F 16 H    3/34 |
| A | | 8-11 | |
| Y | FR-A-1 492 649  (FIAT) * Page 2; figures 3-5 * | 1-3,6,7 ,12 | |
| A | DE-A-2 545 928  (MEISTER) * Revendication; figures * | 1,2,9 | |
| A | US-A-4 151 642  (HOLLAND et al.) * Colonnes 6,7; figures 1,6-8 * | 1,2,5, 11 | |
| A | DE-A-1 625 174  (VEB FRITZ-HECKERT-WERK) * Pages 2-4; figures * | 1,6,7 | |
| A | EP-A-0 125 529  (KOMET) * Pages 5-13; figures * | 1,9,10, 12 | |
| A | PATENT ABSTRACTS OF JAPAN, vol. 9, no. 57 (M-363)[1780], 13 march 1985; & JP-A-59 192 455 (MAKINO FURAISU SEIKI K.K.) 31-10-1984 * Figures 2,3 * | 1,9,12 | **DOMAINES TECHNIQUES RECHERCHES (Int. Cl.4)** B 23 B B 23 D B 23 P B 23 Q |
| A | US-A-1 378 319  (BROOKS) * Figures 1,2,5-7 * | 4 | B 24 B B 25 B B 27 B F 16 H |
| A | FR-A- 924 506  (DYCK) | | |
| A | US-A-3 668 949  (WALKER) | | |

Le présent rapport a été établi pour toutes les revendications

| Lieu de la recherche | Date d'achèvement de la recherche | Examinateur |
|---|---|---|
| LA HAYE | 08-03-1988 | ROSENBAUM H.F.J. |